# EUROPÄISCHE PATENTANMELDUNG

(11) **EP 1 754 649 A1**
(43) Veröffentlichungstag der Anmeldung: **21.02.2007**
(21) Anmeldenummer: 06016504.0
(22) Anmeldetag: 08.08.2006
(51) Int. Cl.: B62D 17/00, B60G 7/00, B60G 21/00

(54) **Einrichtung zur Verstellung des Radsturzes oder der Vorspur**

(30) Priorität: 11.08.2005 DE 102005037973
(71) Anmelder: Schaeffler KG, 91074 Herzogenaurach (DE)
(72) Erfinder: Grau, Ulrich, Dr., 91448 Emskirchen (DE); Kraus, Manfred, Dr., 91074 Herzogenaurach (DE)

(57) **Zusammenfassung**

Die vorliegende Erfindung betrifft eine Einrichtung zur Verstellung des Radsturzes oder der Vorspur der Räder (1) einer Fahrzeugachse (5, 22) eines Kraftfahrzeuges, mit wenigstens zwei zur Anlenkung der Räder (1) vorgesehenen Fahrwerkslenkern (3, 23), an denen ein Aktuator (6, 21) zur Veränderung der Lage dieser Fahrwerkslenker (3, 23) angreift, wobei eine längs verschiebliche Aktuatorachse (5, 22) des Aktuators (6, 21) einerseits an dem einen Fahrwerkslenker (3, 23) und andererseits an dem anderen Fahrwerkslenker (3, 23) angreift.

## Beschreibung

Die vorliegende Erfindung betrifft eine Einrichtung zur Verstellung des Radsturzes oder der Vorspur der Räder einer Fahrzeugachse eines Kraftfahrzeuges. Derartige Einrichtungen können an der Vorderachse und/oder Hinterachse des Kraftfahrzeuges vorgesehen sein. Die Fahrzeugachsen können Starrachsen, Verbundlenkerachsen sowie Einzelradaufhängungen sein. Zu den Einzelradaufhängungen zählen insbesondere Doppelquerlenker-Radaufhängungen und Längs- und Schräglenkerachsen. Die Doppelquerlenker-Radaufhängungen können auch als Mehrlenkerachsen bezeichnet werden. Bei all diesen Achstypen sind Fahrwerkslenker zur Anlenkung der Räder der Fahrwerksachse vorgesehen. An diesen Fahrwerkslenkern greift ein Aktuator zur Veränderung der Lage dieser Fahrwerkslenker an. Mit diesen Einrichtungen kann die Vorspur oder der Radsturz der Räder eingestellt werden, beispielsweise abhängig vom Fahrzustand des Kraftfahrzeuges.

Aus WO 2004/089665 A1 beispielsweise ist eine lenkbare Hinterachse bekannt geworden, bei der die Vorspur über einen Aktuator geändert werden kann. Zu diesem Zweck weist ein Querträger der Hinterachse ein etwa mittig angeordnetes Hebelgelenk auf, dessen Drehachse vertikal angeordnet ist. Zur einen Seite der vertikalen Drehachse greift eine Aktuatorachse am Hebelende des Hebelgelenks an. Zur anderen Seite der vertikalen Drehachse schließen zwei Hebel an, die jeweils an einen Fahrwerkslenker gelenkig angeschlossen sind. Diese Fahrwerkslenker lenken mit ihren von diesem Hebel abgewandten Enden Radträger an, auf denen die Räder des Kraftfahrzeuges drehbar angeordnet sind. Bei dieser Einrichtung zur Veränderung der Vorspur sind eine Vielzahl beweglicher Teile erforderlich: Zunächst die Aktuatorachse, die gelenkig an einem Hebel eines Hebelgelenkes angeschlossen ist; ferner das Hebelgelenk mit Hebel, der drehbar um eine vertikale Achse angeordnet ist; zwei an einem anderen Ende des Hebels angeordnete Schwenklager, an denen jeweils ein Fahrwerkslenker angeschlossen ist, wobei diese Fahrwerkslenker zur Anlenkung der Radträger vorgesehen sind.

Aufgabe der vorliegenden Erfindung ist es, eine Einrichtung zur Verstellung des Radsturzes oder der Vorspur der Räder einer Achse eines Kraftfahrzeuges nach den Merkmalen des Oberbegriffs des Anspruchs 1 anzugeben, die einfach aufgebaut ist. Erfindungsgemäß wird diese Aufgabe dadurch gelöst, dass eine längs verschiebliche Aktuatorachse des Aktuators einerseits an dem einen Fahrwerkslenker und andererseits an dem anderen Fahrwerkslenker angreift. Anstelle einer Vielzahl von beweglichen Teilen genügen erfindungsgemäß lediglich die längs verschiebliche Aktuatorachse und die beiden lenkbaren Fahrwerkslenker. Das eine Ende der Aktuatorachse kann unmittelbar an den einen Fahrwerkslenker gelenkig angeschlossen sein und das andere Ende der Aktuatorachse kann gelenkig an den anderen lenkbaren Fahrwerkslenker angeschlossen sein.

Sofern diese lenkbaren Fahrwerkslenker zur Veränderung des Sturzes der Räder angeordnet sind, werden bei Betätigung des Aktuators beide Räder dieser Fahrzeugachse vorzugsweise im gleichen Drehsinn verschwenkt, so dass bezogen auf die Vorspur des jeweiligen Rades der Vorspurwinkel des einen Rades positiv und der Vorspurwinkel des anderen Rades negativ verändert wird.

Durch die erfindungsgemäße Kopplung der beiden Fahrwerkslenker mittels der Aktuatorachse werden bei Geradeausfahrt des Kraftfahrzeuges wirkende Momente derart kompensiert, dass keine Halteleistung am Aktuator aufgebracht werden muss. In Abhängigkeit der Kinematik ― also der Lage der Sturzgelenkachse ― tritt dieser Kompensationseffekt auch noch bei deutlichen Querbeschleunigungen auf. Die erfindungsgemäße Einrichtung ermöglicht problemlos eine symmetrische Verteilung der Gelenkpunkte des Aktuators zu beiden Seiten der Fahrzeuglenkachse.

Ein weiterer Vorteil der Erfindung besteht darin, dass sie bereits an vorhandene Fahrwerkslenker angeschlossen werden kann, aufwendige konstruktive Änderungen am Fahrwerk also weitgehend reduziert sind.

Die von dem Aktuator angelenkten Fahrwerkslenker können die Räder tragende Radträger unmittelbar anlenken. Diese direkte Übersetzung hat den Vorteil einer minimierten Anzahl von Gelenken und einer exakten Stellbewegung der Radträger.

Die Aktuatorachse des Aktuators kann in günstiger Weise als Kugelgewindespindel eines Kugelgewindetriebes ausgebildet sein, wobei die Enden der Kugelgewindespindel gelenkig an die angelenkten Fahrwerkslenker anschließen. Die Aktuatorachse kann sowohl Zug als auch Schub in Längsrichtung übertragen. Herkömmliche Kugelgewindespindeln sind für die Übertragung dieser Kräfte hervorragend geeignet.

Eine erfindungsgemäße Einrichtung weist vorzugsweise einen Aktuator auf, dessen Motor, insbesondere Elektromotor, einen Kugelgewindetrieb aufweist, wobei eine Spindelmutter auf der Kugelgewindespindel angeordnet ist. Die Spindelmutter ist vorzugsweise so angeordnet, dass bei einer Neutralstellung der Kugelgewindespindel die Spindelmutter mittig zwischen den beiden Enden der Kugelgewindespindel angeordnet ist. Die freien Teilstücke zwischen den Enden der Kugelgewindespindel und der Spindelmutter sind demzufolge zu beiden Seiten der Spindelmutter etwa gleich groß, wobei die mittig angeordnete Spindelmutter zudem unerwünschte Schwingungen der Aktuatorachse zu unterbinden hilft.

Der Motor des Aktuators ist in Bezug auf einen Fahrschemel des Kraftfahrzeuges oder in Bezug auf einen Fahrzeugaufbau gestellfest angeordnet. Fahrschemel sind fest oder beispielsweise über Gummiblöcke mit dem Fahrzeugaufbau verbunden. Fahrschemel werden gelegentlich auch als Achsträger bezeichnet.

Der zuvor beschriebene erfindungsgemäße Aktuator kann mit einem Kugelgewindetrieb versehen sein. Die Spindelmutter ist um die Kugelgewindespindel herum drehbar gelagert, wobei die längs verschiebliche Kugelgewindespindel in Bezug auf den Fahrschemel radial gelagert und drehfest angeordnet ist. Problemlos können bei dieser Anordnung weitere Führungsbuchsen vorgesehen sein, in denen die Kugelgewindespindel in den Bereichen zwischen der Spindelmutter und den Gelenkenden der Kugelgewindespindel geführt ist. Diese Führungsbuchsen können ebenfalls an dem Fahrschemel befestigt sein. Diese weiteren Führungsbuchsen können den Zweck erfüllen, ein Ausknicken der Kugelgewindespindel unter Einwirkung von Schub auf die Kugelgewindespindel auszuschließen und ferner verhindern sie wirkungsvoll unerwünschte Schwingbewegungen der Kugelgewindespindel.

Die zuvor beschriebene erfindungsgemäße Einrichtung mit dem Kugelgewindetrieb eignet sich in besonderer Weise dafür, dass die Aktuatorachse quer zur Längsachse des Kraftfahrzeuges angeordnet ist. Diese Aktuatorachse kann beispielsweise längs eines Querträgers des Fahrschemels angeordnet sein. Die zuvor beschriebenen weiteren Führungsbuchsen können dann problemlos an diesem Querträger befestigt werden.

Für Anwendungen, bei denen eine erfindungsgemäße Einrichtung zur Verstellung des Radsturzes eingesetzt werden soll, sind gemäß einer erfindungsgemäßen Weiterbildung die lenkbaren Fahrwerkslenker einerseits von der Aktuatorachse angelenkt und andererseits lenken diese Fahrwerkslenker einen geteilten Radträger an, wobei ein mit dem Radlager versehener erster Teil des geteilten Radträgers über ein Sturzlager schwenkbeweglich an einem vorzugsweise ein Federbein tragenden zweiten Teil des geteilten Radträgers angeordnet ist. Derartige geteilte Radträger lassen sich bei unterschiedlichsten Achskonstruktionen wie Federbeinachsen, Verbundlenkerachsen, McPherson-Aufhängungen einsetzen.

Dieser lenkbare Fahrwerkslenker lenkt dann den ersten Teil des geteilten Radträgers an.

Eine weitere erfindungsgemäße Einrichtung sieht vor, dass zwischen den beiden lenkbaren Fahrwerkslenkern und der Aktuatorachse je ein Hebelgelenk angeordnet ist, wobei ein Hebel des Hebelgelenkes mit seinem einen Ende an dem Fahrwerkslenker und mit seinem anderen Ende an der Aktuatorachse angreift. Zwar ist hier die Anzahl der beweglichen Teile erhöht; jedoch wird der erfindungsgemäße Vorteil beibehalten, dass eine symmetrische Anordnung des erfindungsgemäßen Aktuators erhalten bleibt: Denn die beiden Gelenke können symmetrisch zur Fahrzeuglängsachse an beide Enden der Aktuatorachse anschließen. Derartige Hebelgelenke dienen zum einen dem Zweck, die von der Aktuatorachse aufzubringenden Zug- oder Schubkräfte zu reduzieren.

Wenn eine Kippachse des Hebelgelenks gegenüber dem Fahrschemel des Kraftfahrzeuges in Richtungen quer zur Kippachse fixiert ist, ergibt sich ein weiterer Vorteil dadurch, dass beispielsweise durch Fahrbahnunebenheiten über den Radträger in den lenkbaren Fahrwerkslenker eingeleitete impulsartige Kräfte nur teilweise in die Aktuatorachse eingeleitet werden. Der andere Teil dieser impulsartigen Kräfte wird über die Kippachse des Hebelgelenkes in den Fahrschemel eingeleitet.

Erfindungsgemäße Einrichtungen sind auch bei Achskonstruktionen einzusetzen, bei denen nicht nur ein lenkbarer Fahrwerkslenker pro Rad vorgesehen ist, sondern bei dem mehrere Fahrwerkslenker mechanisch gekoppelt sind, wobei dann die Aktuatorachse in geeigneter Weise dieses so gekoppelten Fahrwerkslenker anlenkt.

Nachstehend wird die Erfindung anhand von drei in insgesamt fünf Figuren abgebildeten Ausführungsbeispielen näher erläutert. Es zeigen:
- Figur 1: eine erfindungsgemäße Einrichtung in schematischer Darstellung,
- Figur 2: einen Ausschnitt einer gegenüber der Figur 1 modifizierten erfindungsgemäßen Einrichtung,
- Figur 3: eine weitere erfindungsgemäße Einrichtung in schematischer Darstellung und die
- Figuren 4 und 5: einen geteilten Radträger für den Einsatz mit einer erfindungsgemäßen Einrichtung gemäß Figur 3.

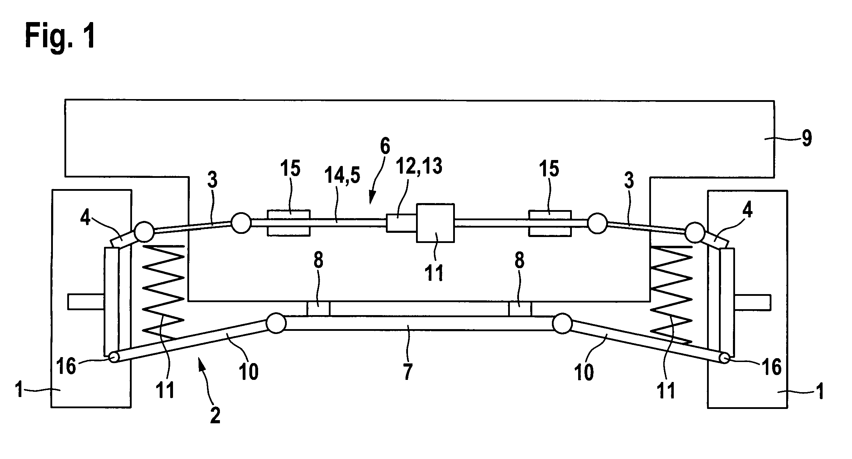

Figur 1 zeigt eine erfindungsgemäße Einrichtung zur Verstellung des Radsturzes der Räder 1 einer Fahrzeugachse 2 eines Kraftfahrzeuges in schematischer Darstellung. Die Einrichtung umfasst zwei zur Anlenkung der Räder 1 vorgesehene lenkbare Fahrwerkslenker 3, die mit ihrem einen Ende gelenkig an einen Radträger 4 angeschlossen sind. Das jeweils andere Ende beider lenkbaren Fahrwerkslenker 3 ist gelenkig an jeweils ein Ende einer Aktuatorachse 5 eines Aktuators 6 angeschlossen.

Ein Fahrschemel 7 ist über Gummilager 8 fest mit einem Fahrzeugaufbau 9 verbunden. Weitere Fahrwerkslenker 10 sind einerseits an den Radträger 4 und anderseits an den Fahrschemel 7 gelenkig angeschlossen. Diese weiteren Fahrwerkslenker 10 dienen zudem als Abstützung für hier lediglich schematisch abgebildete Federbeine 11.

Der erfindungsgemäße Aktuator 6 umfasst neben der Aktuatorachse 5 einen Elektromotor 11 und einen Kugelgewindetrieb 12. Der Kugelgewindetrieb 12 umfasst eine Spindelmutter 13, die in bekannter Weise drehbar auf einer Kugelgewindespindel 14 angeordnet ist. Die Kugelgewindespindel 14 ist vorliegend an der Aktuatorachse 5 ausgebildet. Die Aktuatorachse 5 und die Kugelgewindespindel 14 sind vorliegend einstückig hergestellt und gegenüber dem Fahrschemel 7 und dem Fahrzeugaufbau 9 drehfest, aber längs verschieblich angeordnet. Der Elektromotor 11 ist wahlweise an dem Fahrzeugaufbau 9 oder an dem Fahrschemel 7 befestigt und treibt die Spindelmutter 13 an. Die Spindelmutter 13 ist gegenüber dem Fahrschemel 7 und dem Fahrzeugaufbau 9 in Längsrichtung der Aktuatorachse 5 fixiert und radial gegenüber dem Fahrschemel 7 oder dem Fahrzeugaufbau 9 gelagert.

Die Aktuatorachse 5 ist zudem über Führungsbuchsen 15 längs verschieblich gelagert, wobei diese beiden Führungsbuchsen 15 an dem Fahrschemel 7 oder an dem Fahrzeugaufbau 9 befestigt sein können. Diese Führungsbuchsen 15 verhindern einerseits ein unerwünschtes Ausknicken der Aktuatorachse 5 und unterbinden unerwünschtes Schwingen der Aktuatorachse 5. Die Aktuatorachse 5 ist quer zur Fahrzeuglängsachse angeordnet, wobei der Kugelgewindetrieb 12 und der Motor 11 etwa mittig bei der Fahrzeuglängsachse angeordnet sind. Zu beiden Seiten der Fahrzeuglängsachse besteht eine etwa symmetrische Anordnung der weiteren Aktuatorteile und der angelenkten Fahrwerkslenker 3.

Nachstehend wird die Wirkungsweise der erfindungsgemäßen Einrichtung näher erläutert. Wenn der Elektromotor 11 die Spindelmutter 13 des Kugelgewindetriebes 12 antreibt, wird diese rotative Bewegung der Spindelmutter 13 in eine Längsverschiebung der Kugelgewindespindel 14 und somit der Aktuatorachse 5 entlang ihrer Längsachse umgewandelt. Beispielsweise kann die Aktuatorachse 5 in Richtung auf die linke Fahrzeugseite verschoben werden. In diesem Fall verändert der Fahrwerkslenker 3 seine Lage und verschwenkt den Radträger 4, so dass der Radsturz des Rades 1 verändert ist. In dieser schematischen Abbildung verschwenkt der Radträger 4 um eine Schwenkachse 16 eines Sturzlagers 16a. Bei der beschriebenen Verschiebung der Aktuatorachse 5 vergrößert sich der Sturzwinkel des linken Rades positiv, wogegen der Sturzwinkel des rechten Rades 1 entsprechend negativ vergrößert wird.

Bei der erfindungsgemäßen Einrichtung zur Verstellung des Radsturzes werden äußere, in die beiden Räder 1 dieser Fahrzeugachse eingeleitete Kräfte an der Aktuatorachse 5 kompensiert, so dass der Aktuator 6 keine zusätzlichen Haltekräfte übertragen muss: Federn beispielsweise beide Räder aufgrund einer Kraft nach oben ein, tendiert der links abgebildete Radträger 4 zu einer Schwenkung im Uhrzeigersinn und der rechts abgebildete Radträger 4 zu einer Verschwenkung entgegen dem Uhrzeigersinn. Demzufolge werden in beide angelenkten Fahrwerkslenker 3 Druckkräfte eingeleitet, die vom Betrag her wenigstens annähernd gleich groß sind. Das bedeutet, dass an der Aktuatorachse 5 keine zusätzlichen Kräfte angreifen, die auf die Spindelmutter 13 als zusätzliche Kräfte übertragen werden.

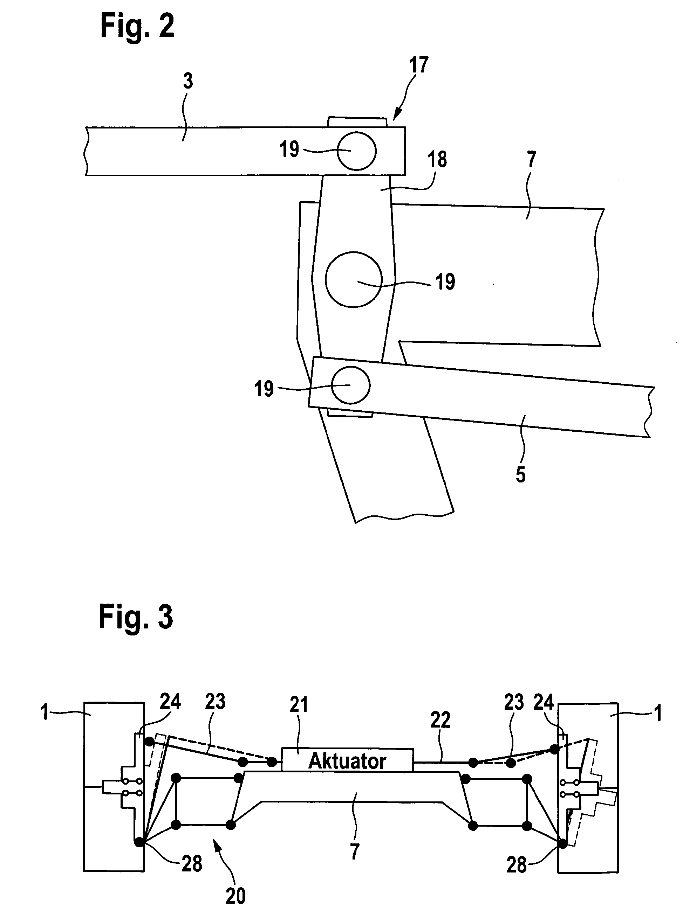

Figur 2 zeigt einen modifizierten Ausschnitt der in Figur 1 abgebildeten erfindungsgemäßen Einrichtung. Dieser Ausschnitt zeigt den Fahrschemel 7, die Aktuatorachse 5 und den Fahrwerkslenker 3 ausschnittsweise. Anders als bei dem Ausführungsbeispiel gemäß Figur 1 ist zwischen den Fahrwerkslenker 3 und die Aktuatorachse 5 ein Hebelgelenk 17 angeordnet. Dieses Hebelgelenk 17 umfasst einen Hebel 18, der um eine Kippachse 19 kippbeweglich angeordnet ist. Die Kippachse 19 ist in Bezug auf den Fahrschemel 7 oder in Bezug auf den Fahrzeugaufbau 9 fixiert. Das eine Ende des Hebels 18 ist gelenkig mit dem Fahrwerkslenker 3 verbunden. Das andere Ende des Hebels 18 ist gelenkig mit der Aktuatorachse 5 verbunden. Der wirksame Hebelarm zwischen der Kippachse 19 und dem Angriffspunkt der Aktuatorachse 5 und der wirksame Hebelarm zwischen der Kippachse 19 und dem Angriffspunkt des Fahrwerkslenker 3 sind so gewählt, dass eine angepasste Belastung der Aktuatorachse 5 auf Schub oder Zug gewährleistet ist. In den Fahrwerkslenker 3 von außen eingeleitete impulsartige Kräfte werden zumindest teilweise über die Kippachse 19 in den Fahrschemel 7 eingeleitet, so dass diese impulsartige Belastung nicht in voller Höhe auf die Aktuatorachse 5 übertragen wird.

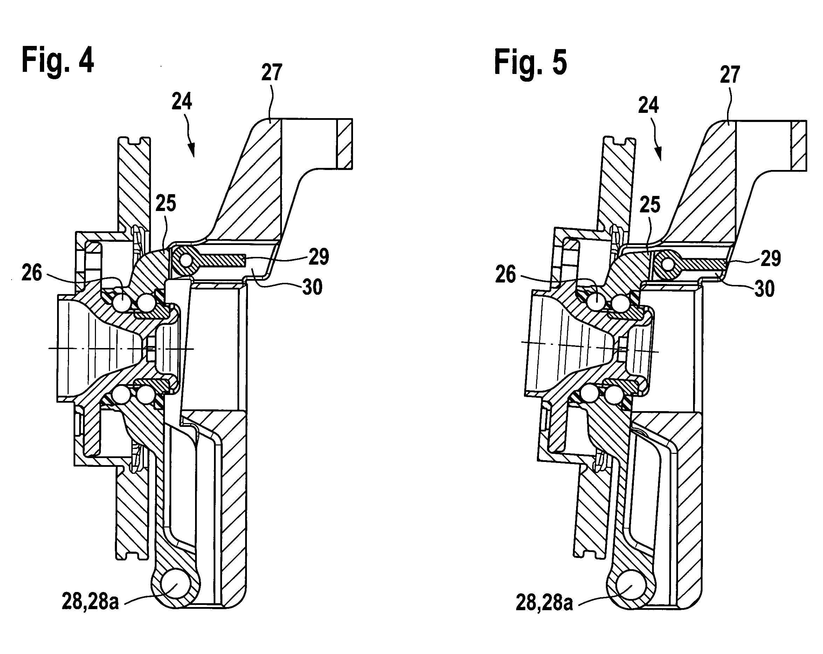

Das Ausführungsbeispiel gemäß den Figuren 3 bis 5 zeigt eine erfindungsgemäße Einrichtung zur Verstellung des Radsturzes bei einer Mehrlenkerachse. Figur 3 zeigt vom Grundaufbau her ähnlich wie Figur 1 die Räder 1, die über eine Mehrlenkerachse 20 an den Fahrschemel 7 angebunden sind. Ein Aktuator 21 umfasst eine Aktuatorachse 22, die längs verschieblich ist, wobei eine Längsverschiebung über den Aktuator 21 gezielt eingeleitet wird. Der Aktuator 21 kann ebenso wie der weiter oben beschriebene Aktuator vorzugsweise durch einen Kugelgewindetrieb gebildet sein, der von einem Elektromotor angetrieben wird, wobei dann die Kugelgewindespindel ebenfalls an der Aktuatorachse 22 ausgebildet sein kann. Die Aktuatorachse 22 schließt gelenkig an Fahrwerkslenker 23 an, wobei diese Fahrwerkslenker 23 andererseits jeweils gelenkig an einen geteilten Radträger 24 angebunden sind. Die grundlegende Funktionsweise dieser erfindungsgemäßen Einrichtung entspricht der zu dem oben beschriebenen Ausführungsbeispiel. Die Bewegungsabläufe unterscheiden sich aufgrund des modifizierten Radträgers, was anhand der Figuren 4 und 5 näher erläutert werden soll.

Die Figuren 4 und 5 zeigen den geteilten Radträger 24, wobei ein erster Teil 25 des geteilten Radträgers 24 mit einem Radlager 26 für das hier nicht weiter abgebildete Rad versehen ist. Ein zweiter Teil 27 des geteilten Radträgers 24 nimmt ein hier nicht abgebildetes Federbein auf. Der erste Teil 25 ist um eine Schwenkachse 28 eines Sturzlagers 28a herum verschwenkbeweglich am zweiten Teil 27 des geteilten Radträgers 24 gelagert. Der erste Teil 25 ist mit einem gelenkig angebundenen Anschlussteil 29 versehen, das vorliegend in einer Durchgangsöffnung des zweiten Teils 27 angeordnet ist. An dieses Anschlussteil 29 schließt der in der Figur 3 schematisch abgebildete Fahrwerkslenker 23 an. Unter Betätigung des Aktuators 21 findet eine Längsverschiebung der Aktuatorachse 22 statt. Der erste Teil 25 des Radträgers 24 verschwenkt im Uhrzeigersinn um die Schwenkachse 28 herum und erreicht seine verschwenkte Position in Figur 5.

Der ursprüngliche und der verschobene Zustand der Aktuatorachse sind in der Figur 3 mit einer durchgezogenen und mit einer gestrichelten Linie angedeutet. Entsprechend der Lage der Aktuatorachse verändert sich die Lage der Fahrwerkslenker 23 was anhand der gestrichelten Abbildung in Figur 3 erkennbar ist. Ebenso ist anhand der Figur 3 zu erkennen, dass in der nach rechts verschobenen Stellung der Aktuatorachse 22 die beiden Radträger 24 im Uhrzeigersinn um die Schwenkachsen 28 herum verschwenkt sind.

### Bezugszahlenliste

- 1: Rad
- 2: Fahrzeugachse
- 3: Fahrwerkslenker
- 4: Radträger
- 5: Aktuatorachse
- 6: Aktuator
- 7: Fahrschemel
- 8: Gummilager
- 9: Fahrzeugaufbau
- 10: Fahrwerkslenker
- 11: Elektromotor
- 12: Kugelgewindetrieb
- 13: Spindelmutter
- 14: Kugelgewindespindel
- 15: Führungsbuchse
- 16: Schwenkachse
- 16a: Sturzlager
- 17: Hebelgelenk
- 18: Hebel
- 19: Kippachsen
- 20: Mehrlenkerachse
- 21: Aktuator
- 22: Aktuatorachse
- 23: Fahrwerkslenker
- 24: Geteilter Radträger
- 25: Erster Teil
- 26: Radlager
- 27: Zweiter Teil
- 28: Schwenkachse
- 28a: Sturzlager
- 29: Anschlussteil
- 30: Durchgangsöffnung

## Patentansprüche

1. Einrichtung zur Verstellung des Radsturzes oder der Vorspur der Räder (1) einer Fahrzeugachse (5, 22) eines Kraftfahrzeuges, mit wenigstens zwei zur Anlenkung der Räder (1) vorgesehenen Fahrwerkslenkern (3, 23), an denen ein Aktuator (6, 21) zur Veränderung der Lage dieser Fahrwerkslenker (3, 23) angreift, **dadurch gekennzeichnet, dass** eine längs verschiebliche Aktuatorachse (5, 22) des Aktuators (6, 21) einerseits an dem einen Fahrwerkslenker (3, 23) und andererseits an dem anderen Fahrwerkslenker (3, 23) angreift.

2. Einrichtung nach Anspruch 1, bei der diese Fahrwerkslenker (3, 23) die Räder (1) tragende Radträger (4, 24) anlenken.

3. Einrichtung nach Anspruch 1, bei dem die Aktuatorachse (5, 22) als Kugelgewindespindel (14) ausgebildet ist, deren beide Enden gelenkig an diese Fahrwerkslenker (3, 23) anschließen.

4. Einrichtung nach Anspruch 1, bei dem der Aktuator (6, 21) einen von einem Motor, insbesondere Elektromotor (11), angetriebenen Kugelgewindetrieb (12) aufweist, dessen Spindelmutter (13) auf einer die Aktuatorachse (5, 22) bildenden Kugelgewindespindel (14) angeordnet ist.

5. Einrichtung nach Anspruch 4, bei der der Motor des Aktuators (6, 21) in Bezug auf einen Fahrschemel (7) des Kraftfahrzeuges oder in Bezug auf einen Fahrzeugaufbau (9) gestellfest angeordnet ist.

6. Einrichtung nach Anspruch 4, bei der die Spindelmutter (13) in Bezug auf einen Fahrschemel (7) des Kraftfahrzeuges oder in Bezug auf einen Fahrzeugaufbau (9) des Kraftfahrzeuges um die Kugelgewindespindel (14) herum drehbar gelagert und die längs verschiebliche Kugelgewindespindel (14) in Bezug auf den Fahrschemel (7) oder in Bezug auf einen Fahrzeugaufbau (9) radial gelagert und drehfest angeordnet ist.

7. Einrichtung nach Anspruch 1, bei der die längs verschiebliche Aktuatorachse (5, 22) des Aktuators (6, 21) quer zur Längsachse des Kraftfahrzeuges angeordnet ist.

8. Einrichtung nach Anspruch 1 zur Verstellung des Radsturzes, bei der der Fahrwerkslenker (3, 23) einerseits von der Aktuatorachse (5, 22) angelenkt ist und andererseits einen das Rad (1) tragenden geteilten Radträger (24) anlenkt, wobei ein mit einem Radlager (26) versehener erster Teil (25) des geteilten Radträgers (24) über ein Sturzlager (28a) schwenkbeweglich an einem vorzugsweise ein Federbein tragenden zweiten Teil (27) des geteilten Radträgers (24) angeordnet ist.

9. Einrichtung nach Anspruch 8, bei der der Fahrwerkslenker (23) den ersten Teil (25) des geteilten Radträgers (24) anlenkt.

10. Einrichtung nach Anspruch 1, bei der zwischen den beiden Fahrwerkslenkern (3) und der Aktuatorachse (5) je ein Hebelgelenk (17) angeordnet ist, wobei ein Hebel (18) des Hebelgelenks (17) mit seinem einen Ende an dem Fahrwerkslenker (3) und mit seinem anderen Ende an der Aktuatorachse (5) angreift.

11. Einrichtung nach Anspruch 10, bei der der Hebel (18) um eine zwischen den beiden Enden des Hebels (18) angeordnete Kippachse (19) kippbeweglich gelagert ist, wobei die Kippachse (19) gegenüber einem Fahrschemel (7) des Kraftfahrzeuges oder gegenüber einem Fahrzeugaufbau (9) des Kraftfahrzeuges fixiert ist.
